# EUROPÄISCHE PATENTANMELDUNG

(11) **EP 4 422 130 A1**
(43) Veröffentlichungstag der Anmeldung: **28.08.2024**
(21) Anmeldenummer: 24154308.1
(22) Anmeldetag: 29.01.2024
(51) Int. Cl.: H04L 12/40

(54) **VORRICHTUNG UND VERFAHREN ZUM BEREITSTELLEN VON EINDEUTIGEN KENNUNGEN FÜR ENDGERÄTE EINES DATENBUSSES, DATENÜBERTRAGUNGSSYSTEM**

(30) Priorität: 27.02.2023 DE 102023104779
(71) Anmelder: Lisa Dräxlmaier GmbH, 84137 Vilsbiburg (DE)
(72) Erfinder: Truglas, Andreas, 84428 Buchbach (DE); Aufreiter, Clemens, 84036 Landshut (DE)

(57) **Zusammenfassung**

Vorrichtung zum Bereitstellen von eindeutigen Kennungen für Endgeräte, die über einen Datenbus signalkommunizierend miteinander verbunden sind, die Vorrichtung umfassend: eine Spannungsquelle, eine an die Spannungsquelle angeschlossene elektrische Schaltung, die dazu ausgebildet ist mehrere verschiedene Teilspannungen bereitzustellen, und mehrere Identifikatoren, die jeweils dazu ausgebildet sind, eine Teilspannung der elektrischen Schaltung zu messen und in Abhängigkeit der gemessenen Teilspannung eine Kennung an ein dem entsprechenden Identifikator zugeordnetes Endgerät auszugeben

## Beschreibung

### Technisches Gebiet

Die vorliegende Erfindung betrifft eine Vorrichtung zum Bereitstellen von eindeutigen Kennungen für Endgeräte eines Datenbusses, insbesondere eines seriellen Datenbusses. Die Vorrichtung umfasst eine Spannungsquelle, die eine elektrische Schaltung mit mehreren in Reihe geschaltenen Widerständen mit Spannung versorgt. Mehrere Identifikatoren der Vorrichtung sind dazu ausgebildet, jeweils unterschiedliche Teilspannungen an der elektrischen Schaltung zu messen, wobei die Identifikatoren ferner dazu ausgebildet sind, in Abhängigkeit der jeweils gemessenen Teilspannung eine eindeutige Kennung bereitzustellen und an ein dem entsprechenden Identifikator zugeordnetes Endgerät des Datenbusses auszugeben.

Darüber hinaus ist auch ein Datenübertragungssystem Gegenstand der vorliegenden Erfindung. Das Datenübertragungssystem umfasst eine vorgenannte Vorrichtung und einen Datenbus, insbesondere einen seriellen Datenbus, mit mehreren Endgeräten.

Das ebenfalls beanspruchte Verfahren verwirklicht die gleiche erfinderische Idee, wie die Vorrichtung und/oder das Datenübertragungssystem und betrifft insbesondere die zur Nutzung der vorgenannten Vorrichtung erforderlichen Verfahrensschritte.

### Stand der Technik

Aus dem Stand der Technik sind Datenbusse, insbesondere serielle Datenbusse, wie beispielsweise CAN-Busse (Controller Area Network - Busse) und/oder Datenbusse nach dem Industriestandard EIA-485 (auch als RS-485 Standard bezeichnet), bekannt. Bei derartigen Datenbussen sind mehrere Endgeräte, welche regelmäßig auch als Teilnehmer bezeichnet werden, signalkommunizierend über eine Datenleitung miteinander verbunden. Jedes der Endgeräte kann dabei Nachrichten in Form einer Bit-Abfolge versenden und/oder Empfangen. Die Nachrichten umfassen in der Regel eine vordefinierte Abfolge von Status-Bits und Nutz-Bits. Dabei ist es vorteilhaft, dass der Absender einer Nachricht eindeutig identifizierbar ist. Mit anderen Worten müssen empfangende Endgeräte feststellen können, welches Endgerät die empfangene Nachricht versendet hat.

Hierfür ist es im Stand der Technik hinlänglich bekannt, dass jedem Endgerät eine feste Kennung - auch ID genannt - zugeordnet wird und die Endgeräte diese Kennung innerhalb der versendeten Nachricht mitübertragen. Die Zuordnung der Kennung kann dabei hardware-seitig oder software-seitig erfolgen. Bei einer hardware-seitigen Zuordnung wird die Kennung unveränderlich in das Endgerät eingespeichert, so dass das Endgerät immer die gleiche Kennung verwendet. Dies ist insbesondere bei der Nutzung von Datenbussen in Kraftfahrzeugen vorteilhaft. Beispielsweise können Motorsteuergeräte immer die gleiche Kennung aufweisen. Bei einer software-seitigen Zuordnung erfolgt die Zuordnung der Kennung bei jeder Initialisierung und/oder bei der erstmaligen Inbetriebnahme des Datenbusses. Hierbei kann beispielsweise ein Master-Endgerät den Slave-Endgeräten per Nachricht eine Kennung zuordnen, bevor die eigentliche Buskommunikation gestartet wird.

Die beiden vorgenannten Möglichkeiten der Zuordnung haben jedoch erhebliche Nachteile, wenn der Datenbus bei industriellen Prüfsystemen, wie beispielsweise bei Prüfsystemen für Kabelstränge von Fahrzeugen, verwendet wird. Hier müssen regelmäßig mehr als 200 Endgeräte über einen Datenbus kommunizieren, wobei die Endgeräte aus Kostengründen möglichst untereinander austauschbar ausgebildet sein müssen. Eine hardware-seitige Zuordnung der Kennung würde eine solche Austauschbarkeit nicht zulassen. Eine softwareseitige Zuordnung hat eine sehr zeitaufwendige Initialisierung zur Folge, da jedem der mehr als 200 Endgeräte erst nach und nach eine Kennung zugeordnet werden muss.

### Beschreibung der Erfindung

Ausgehend von dem oben aufgeführten Stand der Technik ist es eine Aufgabe der vorliegenden Erfindung, eine Vorrichtung und/oder ein Verfahren zum Bereitstellen von eindeutigen Kennungen für Endgeräte eines Datenbusses anzugeben, welche/welches die oben genannten Probleme und Nachteile des Standes der Technik ausräumt. Insbesondere ist es eine Aufgabe der vorliegenden Erfindung, eine Vorrichtung und/oder ein Verfahren zum Bereitstellen von eindeutigen Kennungen für Endgeräte, die über einen Datenbus, insbesondere über einen seriellen Datenbus, signalkommunizierend miteinander verbunden sind, anzugeben, die/das eine schnelle und flexible Zuordnung von Kennungen bei einer Vielzahl von untereinander austauschbaren Endgeräten ermöglicht.

Diese Aufgabe wird mit einer Vorrichtung gemäß Anspruch 1 gelöst. Vorteilhafte Weiterbildungen und Ausführungsformen der Vorrichtung sind Gegenstand der abhängigen Ansprüche und/oder werden in der nachfolgenden Beschreibung erläutert.

Die erfindungsgemäße Lösung umfasst eine Vorrichtung, die dazu geeignet ist, mehreren Endgeräten, die über einen Datenbus, insbesondere über einen seriellen Datenbus, signalkommunizierend miteinander verbunden sind, jeweils eine eindeutige Kennung zuzuordnen. Mit anderen Worten ist die Vorrichtung dazu eingerichtet, für jedes Endgerät eine Kennung bereitzustellen, wobei sich jede Kennung von den Kennungen der jeweils anderen Endgeräte unterscheidet.

Unter dem Begriff "Kennung" - umgangssprachlich auch als "ID" bezeichnet - wird im Sinne dieser Erfindung jede technisch mögliche Art der eindeutigen Identifizierung eines Endgerätes eines Datenbusses verstanden. Beispielsweise kann die "Kennung" eine am entsprechenden Datenbus einmalige Absenderadresse eines Endgerätes sein. Die "Kennung" kann insbesondere eine durch eine Bitabfolge signalkommunizierend übertragbare Kennzahl sein. Jedes Endgerät weist dabei eine Kennzahl auf, die sich von den Kennzahlen der anderen Endgeräte unterscheidet. Zu Gunsten des einfacheren Verständnisses wird die Kennung nachfolgend als Dezimalwert angegeben. Die Ausführungen können jedoch auch in analoger Weise auf Kennungen im Binär- und/oder Hexadezimalsystem zutreffen.

Erfindungsgemäß umfasst die Vorrichtung eine Spannungsquelle und eine an die Spannungsquelle elektrisch angeschlossene Schaltung. Die Spannungsquelle ist vorzugsweise dazu ausgebildet, die elektrische Schaltung mit einer elektrischen Spannung, insbesondere einer Eingangs- und/oder Gesamtspannung, zu versorgen. Die Spannungsquelle kann Teil eines Endgeräts, insbesondere eines Master-Endgeräts, des Datenbusses sein. Alternativ oder zusätzlich kann die Spannungsquelle auch ein von dem Datenbus unabhängiges Bauteil sein.

Die elektrische Schaltung umfasst mehrere in Reihe geschaltene elektrische Widerstände. Unter der Terminologie "in Reihe geschalten" wird im Sinne dieser Erfindung eine Hintereinanderschaltung zweier oder mehrerer elektrischer Bauelemente, insbesondere zweier oder mehrerer elektrischer Widerstände, verstanden. Die mehreren elektrischen Bauelemente bilden einen einzigen Strompfand und weisen untereinander vorzugsweise keine Abzweigungen auf. Beispielsweise sind die mehreren in Reihe geschaltenen Widerstände derart ausgebildet und/oder in der elektrischen Schaltung angeordnet, dass sich an der elektrischen Schaltung unterschiedliche Teilspannungen abnehmen lassen, insbesondere messen lassen. Unter der Terminologie "unterschiedliche Teilspannungen" werden im Sinne dieser Erfindungen mehrere Teilspannungen verstanden, wobei keine Teilspannung einen Spannungswert aufweist, der mit dem Spannungswert einer anderen Teilspannung identisch ist.

Die erfindungsgemäße Vorrichtung umfasst außerdem mehrere Identifikatoren. Jeder der Identifikatoren ist dazu ausgebildet, eine Teilspannung der elektrischen Schaltung zu messen. Dabei ist jeder Identifikator so mit der Schaltung elektrisch verbunden, dass durch jeden Identifikator jeweils eine Teilspannung messbar ist, insbesondere gemessen wird, die sich von den durch die jeweils anderen Identifikatoren messbaren, insbesondere gemessenen, Teilspannungen unterscheidet. Beispielsweise kann bei einer Vorrichtung mit vier Identifikatoren ein erster Identifikator eine Teilspannung von 5V, ein zweiter Identifikator eine Teilspannung von 10V, ein dritter Identifikator eine Teilspannung von 15V und ein vierter Identifikator eine Teilspannung von 20V messen.

Die Identifikatoren können mit den Endgeräten des Datenbusses verbindbar und/oder verbunden sein. Bevorzugt ist jeder Identifikator mit einem einzigen Endgerät des Datenbusses verbindbar und/oder verbunden. Mit anderen Worten ist jeder Identifikator einem einzigen Endgerät des Datenbusses zuordenbar und/oder zugeordnet. Die Verbindbarkeit und/oder Verbindung zwischen dem jeweiligen Identifikator und dem entsprechenden Endgerät kann auch den Fall umfassen, dass der jeweilige Identifikator ein integraler Bestandteil des entsprechenden Endgeräts ist.

Jeder der Identifikatoren ist vorzugsweise dazu ausgebildet, in Abhängigkeit der gemessenen Teilspannung eine Kennung bereitzustellen. Mit anderen Worten ist die durch den jeweiligen Identifikator bereitgestellte Kennung abhängig von der durch den jeweiligen Identifikator gemessenen Teilspannung. Jeder Identifikator ist erfindungsgemäß dazu ausgebildet, die anhand der gemessenen Teilspannung bereitgestellte Kennung an das dem jeweiligen Identifikator entsprechend zugeordnete Endgerät auszugeben, insbesondere an das dem jeweiligen Identifikator entsprechend zugeordnete Endgerät zu übertragen.

Beispielsweise kann bei einer Vorrichtung mit vier Identifikatoren der erste Identifikator, der eine Teilspannung von 5V gemessen hat, einem ersten Endgerät die Kennung "5" zuordnen. Der zweite Identifikator, der eine Teilspannung von 10V gemessen hat, kann einem zweiten Endgerät die Kennung "10" zuordnen. Der dritte Identifikator, der eine Teilspannung von 15V gemessen hat, kann einem dritten Endgerät die Kennung "15" zuordnen und der vierte Identifikator, der eine Teilspannung von 20V gemessen hat, kann einem vierten Endgerät die Kennung "20" zuordnen.

Die erfindungsgemäße Vorrichtung bewirkt vorteilhafterweise, dass den Endgeräten eines Datenbusses, vollkommen unabhängig vom Datenbus, jeweils eine Kennung, insbesondere eine einzigartige bzw. eindeutige Kennung, zugeordnet werden kann, ohne dass die Initialisierung des Datenbusses zeitlich verzögert wird, oder dass die Endgeräte untereinander nicht ausgetauscht werden können (beispielsweise während Wartungsarbeiten). Davon unabhängig werden für die Zuordnung der unterschiedlichen Kennungen keine Master-Endgeräte und/oder keine zusätzlichen Speicher benötigt. Dies hat den Vorteil, dass durch die erfindungsgemäße Vorrichtung eine schnelle und flexible Zuordnung von Kennungen bei einer Vielzahl von untereinander austauschbaren Endgeräten ermöglicht wird.

Bei einer beispielhaften Weiterbildung der erfindungsgemäßen Vorrichtung sind in jedem Identifikator mehrere Kennungen, insbesondere alle technisch möglichen Kennungen, hinterlegt. Beispielsweise kann jeder Identifikator über einen Speicher verfügen, auf dem mehrere Kennungen, insbesondere alle technisch möglichen Kennungen, gespeichert sind. Vorzugsweise ist jeder hinterlegten Kennung ein vordefinierter Teilspannungsbereich zugeordnet. Beispielsweise kann der Kennung "5" ein Teilspannungsbereichs von > 2V bis ≤ 7,5V zugeordnet sein. Der Kennung "10" kann ein Teilspannungsbereichs von > 7,5V bis ≤ 12,5V zugeordnet sein. Der Kennung "15" kann ein Teilspannungsbereichs von > 12,5V bis ≤ 17,5V zugeordnet sein. Der Kennung "20" kann ein Teilspannungsbereichs von > 17,5V bis ≤ 22,5V zugeordnet sein.

Jeder Identifikator kann bei einer solchen Weiterbildung dazu ausgebildet sein, nur die Kennung auszugeben, die dem vordefinierten Teilspannungsbereich zugeordnet ist und/oder entspricht, in dem die vom jeweiligen Identifikator gemessene Teilspannung liegt. Wenn beispielsweise der erste Identifikator eine Teilspannung von 3,2V gemessen hat, liegt diese Teilspannung im Teilspannungsbereich von > 2V bis ≤ 7,5V. Dementsprechend wird der erste Identifikator die dem Teilspannungsbereich von > 2V und ≤ 7,5V zugeordnete Kennung "5" ausgeben. Wenn beispielsweise der zweite Identifikator eine Teilspannung von 11,2V gemessen hat, liegt diese Teilspannung im Teilspannungsbereich von > 7,5V bis ≤ 12,5V. Dementsprechend wird der zweite Identifikator die dem Teilspannungsbereich von > 7,5V bis ≤ 12,5V zugeordnete Kennung "10" ausgeben. Mit anderen Worten kann die Bereitstellung der Kennung auch schwellenwertbasiert ausgebildet sein.

Die Weiterbildung, bei der in jedem Identifikator mehrere Kennungen hinterlegt sind und die Bereitstellung der Kennung schwellenwertbasiert ausgebildet ist, kann vorteilhafterweise bewirken, dass die Vorrichtung unempfindlicher gegen Messfehler und/oder Änderungen ist. Beispielsweise haben dann thermisch bedingte Widerstandsänderungen an den Widerständen keinen Einfluss mehr auf die Zuordnung der Kennungen. Dies hat den Vorteil, dass die schnelle und flexible Zuordnung von Kennungen bei einer Vielzahl von untereinander austauschbaren Endgeräten besonders zuverlässig erfolgen kann.

Bei einer beispielhaften Ausführungsform kann zumindest einer der Identifikatoren, können vorzugsweise mehrere der Identifikatoren, und können besonders bevorzugt alle Identifikatoren, einen Spannungsmesser aufweisen. Der Spannungsmesser ist vorzugsweise dazu ausgebildet, die an dem jeweiligen Identifikator anliegende Teilspannung der elektrischen Schaltung zu messen bzw. zu bestimmen.

Alternativ oder zusätzlich kann zumindest einer der Identifikatoren, können vorzugsweise mehrere der Identifikatoren, und können besonders bevorzugt alle Identifikatoren, einen Analog-Digital-Wandler aufweisen. Der Analog-Digital-Wandler kann dazu ausgebildet sein, die an dem jeweiligen Identifikator anliegende Teilspannung, insbesondere die durch den entsprechenden Spannungsmesser gemessene Teilspannung, in ein digitales Kennungssignal umzuwandeln. Das digitale Kennungssignal entspricht vorteilhafterweise der durch den entsprechenden Identifikatoren ausgegeben Kennung. Das heißt, dass das Kennungssignal an das Endgerät als Kennung ausgegeben werden kann. Alternativ kann das Kennungssignal auch einer vordefinierten Kennung zuordenbar sein. Vorzugsweise ist der Analog-Digital-Wandler dazu ausgebildet, das Kennungssignal an das Endgerät auszugeben, welches dem entsprechenden Identifikator zugeordnet ist.

Eine Ausführungsform, bei der die Identifikatoren jeweils einen Spannungsmesser und einen Analog-Digital-Wandler aufweisen, bewirkt vorteilhafterweise, dass die Vorrichtung auch an bereits bestehende Datenübertragungssysteme, die einen Datenbus mit mehreren Endgeräten aufweisen, angebunden werden kann. Bei den bestehenden Datenübertragungssystemen kann dann auf die bekannte hardware-seitige bzw. softwareseitige Zuordnung verzichtet werden. Dies hat den Vorteil, dass durch die Vorrichtung eine schnellere und flexiblere Zuordnung von Kennungen ermöglicht wird und die Endgeräte, mit denen die Identifikatoren verbindbar sind, bei Bedarf auch untereinander ausgetauscht werden können.

Bei einer weiteren beispielhaften Ausführungsform ist die elektrische Schaltung als einfacher Spannungsteiler mit einer Vielzahl von ohmschen Widerständen ausgebildet. Dies kann den Vorteil haben, dass die Vorrichtung besonders einfach und kostengünstig hergestellt werden kann, ohne dass die schnelle und flexible Zuordnung von Kennungen und/oder die Austauschbarkeit der Endgeräte, mit denen die Identifikatoren verbindbar sind, negativ beeinflusst wird.

Die eingangs erwähnte Aufgabe der vorliegenden Erfindung wird auch mit einem Datenübertragungssystem gemäß Anspruch 5 gelöst. Vorteilhafte Weiterbildungen und Ausführungsformen des Datenübertragungssystems sind Gegenstand der abhängigen Ansprüche und/oder werden in der nachfolgenden Beschreibung erläutert.

Das erfindungsgemäße Datenübertragungssystem umfasst eine Vorrichtung gemäß den vorstehenden Ausführungen. Sämtliche der vorgenannten Weiterbildungen, Ausführungsformen und/oder Merkmalskombinationen können auch bei dem Datenübertragungssystem realisiert sein. Dementsprechend treffen sämtliche Ausführungen zu den Weiterbildungen, Ausführungsformen und/oder Merkmalskombinationen, sowie die jeweiligen Vorteile in analoger Weise auch auf das Datenübertragungssystem zu.

Das Datenübertragungssystem umfasst erfindungsgemäß mehrere Endgeräte. Jedes der Endgeräte ist über einen Datenbus, insbesondere über einen seriellen Datenbus, signalkommunizierend mit den jeweils anderen Endgeräten verbunden. Das heißt, dass die Endgeräte über den Datenbus untereinander Nachrichtensignale austauschen können. Jeder Identifikator der Vorrichtung ist einem, insbesondere einem einzigen, Endgerät zugeordnet.

Erfindungsgemäß sind die Endgeräte dazu ausgebildet, die durch den jeweils zugeordneten Identifikator ausgegebene Kennung bei der Signalkommunikation über den Datenbus zu verwenden, bevorzugt zu versenden und besonders bevorzugt innerhalb jeder der durch das jeweilige Endgerät ausgesendeten Nachricht zu verwenden. Beispielsweise kann die Kennung innerhalb eines Nachrichtenrahmens - auch als Message-Frame bezeichnet - als Bit-Abfolge mitversendet werden. Die Kennung kann dabei Bestandteil der Abfolge von Steuer-Bits und/oder der Abfolge von Nutz-Bits sein.

Beispielsweise kann jede Nachricht zur Identifizierung des Nachrichtentyps eine Basiskennung aufweisen. Die Basiskennung kann insbesondere einen Dezimalwert "100" aufweisen, so dass die Basiskennung innerhalb der Nachricht als binäres Signal "1100100" übertragen werden kann. Nun könnte die einem Endgerät entsprechend zugeordnete Kennung auf die Basiskennung der jeweiligen Nachricht aufaddiert werden. Wenn beispielsweise der erster Identifikator aufgrund der durch den ersten Identifikator gemessenen Teilspannung dem ersten Endgerät die Kennung "5" zugewiesen hat, kann eine durch das erste Endgerät versendete Nachricht die geänderte Basiskennung "105" (100 + 5 = 105), also ein geändertes Binärsignal von "1101001", aufweisen. Die Endgeräte, welche die Nachricht mit der geänderten Basiskennung empfangen, können dann durch Subtraktion der bekannten Basiskennung von der empfangenen geänderten Basiskennung das versendende Endgerät, im vorliegenden Beispielfall das erste Endgerät, eindeutig identifizieren.

Bei dem erfindungsgemäßen Datenübertragungssystem können vorteilhafterweise, sehr viele Endgeräte, beispielsweise mehr als 200 Endgeräte, vorzugsweise mehr als 400 Endgeräte und besonders bevorzugt mehr als 500 Endgeräte, gleichzeitig initialisiert werden, also mit einer eindeutigen Kennung versorgt werden. Gleichzeitig können die Endgeräte auch untereinander austauschbar sein, wobei jedem Endgerät mit der Initialisierung immer die korrekte Kennung neu zugewiesen wird.

Bei einer beispielhaften Weiterbildung des Datenübertragungssystems weist das Endgerät den Identifikator auf. Mit anderen Worten umfasst jedes Endgerät den jeweils zugeordneten Identifikator. Das Endgerät und der entsprechende Identifikator können in einem gemeinsamen Bauteilgehäuse angeordnet sein, auf einer gemeinsamen Platine angeordnet sein und/oder innerhalb eines gemeinsamen Chips ausgebildet sein. Der Identifikator kann ein integraler Bestandteil des Endgeräts sein.

Diese Weiterbildung hat den Vorteil, dass die Anzahl der Steckverbindungen und/oder Einzelkomponenten erheblich reduziert werden kann, ohne dass die Zuverlässigkeit der Zuordnung von eindeutigen Kennungen und/oder die Austauschbarkeit der Endgeräte negativ beeinflusst wird.

Bei einer beispielhaften Ausführungsform des Datenübertragungssystems ist der Datenbus, insbesondere der serielle Datenbus, ein CAN-Bus. Dies hat den Vorteil, dass die Vorrichtung innerhalb des Datenübertragungssystems mit einem bekannten und in der Praxis bewehrten Datenbussystem kombiniert werden kann.

Das Datenübertragungssystem ist vorzugsweise dazu geeignet, in Prüfsystemen, beispielsweise in Prüfsystemen für elektrische Bauteile, vorzugsweise in Prüfsystemen für Kabelbäume mit einer Vielzahl von elektrischen Leitungen und besonders bevorzugt in Prüfsystemen für Kabelbäume für Fahrzeuge, verwendet zu werden. Das Datenübertragungssystem kann insbesondere Teil eines der vorgenannten Prüfsysteme sein.

Die eingangs erwähnte Aufgabe der vorliegenden Erfindung wird auch mit einem Verfahren gemäß Anspruch 8 gelöst. Vorteilhafte Weiterbildungen und Ausführungsformen des Verfahrens sind Gegenstand der abhängigen Ansprüche und/oder werden in der nachfolgenden Beschreibung erläutert.

Grundsätzlich ist es denkbar, dass das erfindungsgemäße Verfahren unabhängig von der oben beschriebenen Vorrichtung und/oder dem oben beschriebenen Datenübertragungssystem ausgeführt werden kann. Das heißt, dass das erfindungsgemäße Verfahren mit einer alternativen Vorrichtung und/oder einem alternativen Datenübertragungssystem ausgeführt werden kann. Vorteilhafterweise wird das Verfahren jedoch mit einer Vorrichtung und/oder einem Datenübertragungssystem gemäß der obigen Ausführungen ausgeführt. In diesem Fall können sämtliche der vorgenannten Weiterbildungen, Ausführungsformen und/oder Merkmalskombinationen, sowie die jeweiligen Vorteile in analoger Weise auch auf das Verfahren zutreffen.

Erfindungsgemäß umfasst das Verfahren einen anfänglichen Verfahrensschritt, bei dem eine Spannung an eine elektrische Schaltung angelegt wird. Die elektrische Schaltung umfasst dabei mehreren in Reihe geschaltene elektrische Widerstände.

Bei einem weiteren Verfahrensschritt werden durch mehrere Identifikatoren jeweils verschiedene Teilspannungen an der elektrischen Schaltung gemessen. Das heißt, dass jeder der Identifikatoren jeweils eine Teilspannung misst, die sich von den durch die anderen Identifikatoren gemessenen Teilspannungen unterscheidet.

Bei einem weiteren Verfahrensschritt werden von den Identifikatoren Kennungen bereitgestellt, wobei jeder Identifikator vorzugsweise jeweils eine, insbesondere jeweils eine einzige Kennung, bereitstellt. Vorzugsweise werden die Kennungen in Abhängigkeit der durch den entsprechenden Identifikator gemessenen Teilspannung bereitgestellt. Dementsprechend unterscheiden sich die einzelnen Kennungen aufgrund der unterschiedlichen Teilspannungen voneinander. Jede Kennung ist einzigartig. Mit anderen Worten unterscheidet sich die Kennung eines einzelnen Identifikators von den Kennungen der anderen Identifikatoren.

Bei einem weiteren Verfahrensschritt werden die Kennungen von den Identifikatoren an ein jeweiliges Endgerät übertragen. Dabei überträgt jeder Identifikator die durch den entsprechenden Identifikator bereitgestellte Kennung nur an ein dem Identifikator zugeordnetes Endgerät, insbesondere nur an ein einziges dem Identifikator zugeordnetes Endgerät.

Das erfindungsgemäße Verfahren bewirkt vorteilhafterweise, dass den Endgeräten eines Datenbusses, vollkommen unabhängig vom Datenbus, jeweils eine Kennung, insbesondere eine einzigartige bzw. eindeutige Kennung, zugeordnet werden kann, ohne dass die Initialisierung des Datenbusses zeitlich verzögert wird, oder dass die Endgeräte untereinander nicht ausgetauscht werden können (beispielsweise während Wartungsarbeiten). Davon unabhängig werden für die Zuordnung der unterschiedlichen Kennungen keine Master-Endgeräte und/oder keine zusätzlichen Speicher benötigt. Dies hat den Vorteil, dass durch das erfindungsgemäße Verfahren eine schnelle und flexible Zuordnung von Kennungen bei einer Vielzahl von untereinander austauschbaren Endgeräten ermöglicht wird.

Bei einer beispielhaften Ausführungsform des Verfahrens versenden die Endgeräte die jeweils von dem entsprechenden Identifikator bereitgestellte und an das jeweilige Endgerät übertragene Kennung über den Datenbus, insbesondere über den seriellen Datenbus. Vorzugsweise wird die Kennung innerhalb einer Nachricht, die das Endgerät über den Datenbus versendet, vorzugsweise innerhalb aller Nachrichten, die das Endgerät über den Datenbus versendet, mitübertragen.

Bei einer vorteilhaften Weiterbildung der vorgenannten Ausführungsform kann die durch ein Endgerät über den Datenbus versendete Kennung von zumindest einem anderen Endgerät am Datenbus, vorzugsweise von allen anderen Endgeräten am Datenbus, empfangen werden. Aufgrund der empfangenen Kennung kann das empfangende Endgerät das sendende Endgerät eindeutig identifizieren.

Beispielsweise kann jede Nachricht zur Identifizierung des Nachrichtentyps eine Basiskennung aufweisen. Die Basiskennung kann insbesondere einen Dezimalwert "100" aufweisen, so dass die Basiskennung innerhalb der Nachricht als binäres Signal "1100100" übertragen werden kann. Nun könnte die einem Endgerät entsprechend zugeordnete Kennung auf die Basiskennung der jeweiligen Nachricht aufaddiert werden. Wenn beispielsweise der erster Identifikator aufgrund der durch den ersten Identifikator gemessenen Teilspannung dem ersten Endgerät die Kennung "5" zugewiesen hat, kann eine durch das erste Endgerät versendete Nachricht die geänderte Basiskennung "105" (100 + 5 = 105), also ein geändertes Binärsignal von "1101001", aufweisen. Die Endgeräte, welche die Nachricht mit der geänderten Basiskennung empfangen, können dann durch Subtraktion der bekannten Basiskennung von der empfangenen geänderten Basiskennung das versendende Endgerät, im vorliegenden Beispielfall das erste Endgerät, eindeutig identifizieren.

Dies hat den Vorteil, dass sehr viele Endgeräte, beispielsweise mehr als 200 Endgeräte, vorzugsweise mehr als 400 Endgeräte und besonders bevorzugt mehr als 500 Endgeräte, durch das Verfahren gleichzeitig initialisiert werden können, also durch das Verfahren mit einer eindeutigen Kennung versorgt werden können. Gleichzeitig können die Endgeräte auch untereinander austauschbar sein, wobei jedem Endgerät bei Ausführung des Verfahrens immer eine eindeutige Kennung neu zugewiesen wird.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Dies gilt unabhängig davon, ob die jeweiligen Merkmale als Vorrichtungs- oder als Verfahrensmerkmale offenbart sind. Weitere Merkmale, Vorteile und Ausführungsformen der Erfindung ergeben sich aus der nachfolgenden Figurenbeschreibung, sowie den in den Figuren dargestellten Ausführungsbeispielen. Es zeigen:
- Fig. 1: eine schematische Darstellung eines Datenübertragungssystems, und
- Fig. 2: ein Prozessschaubild eines Verfahrens.

### Wege zur Ausführung der Erfindung

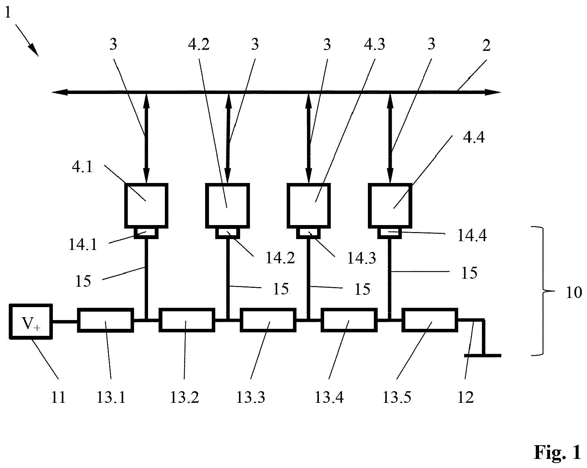

Fig. 1 zeigt eine schematische Darstellung eines Datenübertragungssystems 1. Das Datenübertragungssystem 1 umfasst eine Vorrichtung 10 und einen Datenbus 2, der in dem in Fig. 1 dargestellten Ausführungsbeispiel als serieller Datenbus 2 ausgebildet ist.

Über den Datenbus 2 sind mehrere Endgeräte 4.1, 4.2, 4.3, 4.4 signalkommunizierend miteinander verbunden. Hierfür ist jedes der Endgeräte 4.1, 4.2, 4.3, 4.4 über eine Datenverbindung 3 an den Datenbus 2 angeschlossen. Ganz konkret sind bei dem dargestellten Ausführungsbeispiel ein erstes Endgerät 4.1, ein zweites Endgerät 4.2, ein drittes Endgerät 4.3 und ein viertes Endgerät 4.4 an den Datenbus 2 angeschlossen. Die Endgeräte 4.1, 4.2, 4.3, 4.4 können über den Datenbus 2 Nachrichtensignale austauschen, wobei immer eines der Endgeräte 4.1, 4.2, 4.3, 4.4 eine Nachricht versendet und diese Nachricht von allen anderen Endgeräten 4.1, 4.2, 4.3, 4.4 empfangen wird. Damit die empfangenden Endgeräte 4.1, 4.2, 4.3, 4.4 identifizieren können, von welchem Endgerät 4.1, 4.2, 4.3, 4.4 die empfangene Nachricht stammt, übermitteln die Endgeräte 4.1, 4.2, 4.3, 4.4 innerhalb jeder Nachricht jeweils eine eindeutige Kennung. Jedes Endgerät 4.1, 4.2, 4.3, 4.4 muss also eine Kennung aufweisen, die sich von den Kennungen der jeweils anderen Endgeräte 4.1, 4.2, 4.3, 4.4 unterscheidet.

Die Vorrichtung 10 ist dazu ausgebildet, jeweils eine eindeutige Kennung für die Endgeräte 4.1, 4.2, 4.3, 4.4 bereitzustellen. Hierfür weist die Vorrichtung 10 eine elektrische Schaltung 12 auf. An die elektrische Schaltung 12 ist eine Spannungsquelle 11 angeschlossen. Die Spannungsquelle 11 versorgt die elektrische Schaltung 12 mit einer Eingangsspannung bzw. einer Gesamtspannung.

Die elektrische Schaltung 12 ist in dem in Fig. 1 dargestellten Ausführungsbeispiel als einfacher Spannungsteiler mit einer Vielzahl von in Reihe geschaltenen ohmschen Widerständen 13.1, 13.2, 13.3, 13.4, 13.5, nämlich einem ersten ohmschen Widerstand 13.1, einem zweiten ohmschen Widerstand 13.2, einem dritten ohmschen Widerstand 13.3, einem vierten ohmschen Widerstand 13.4 und einen fünften ohmschen Widerstand 13.5, ausgebildet.

Die Vorrichtung 10 umfasst außerdem mehrere Identifikatoren 14.1, 14.2, 14. 3, 14.4, nämlich einen ersten Identifikator 14.1, einen zweiten Identifikator 14.2, einen dritten

Identifikator 14.3 und einen vierten Identifikator 14.4. Jeder der Identifikatoren 14.1, 14.2, 14. 3, 14.4 ist über eine elektrische Verbindung 15 an die elektrische Schaltung 12 angeschlossen. Die Identifikatoren 14.1, 14.2, 14. 3, 14.4 sind dazu ausgebildet, jeweils eine Teilspannung der elektrischen Schaltung 12 zu messen. Hierzu verfügt jeder der Identifikatoren 14.1, 14.2, 14. 3, 14.4 über jeweils einen Spannungsmesser (in Fig. 1 nicht explizit eingezeichnet). Aufgrund der Anordnung der ohmschen Widerstände 13.1, 13.2, 13.3, 13.4, 13.5 und der Anbindung der Identifikatoren 14.1, 14.2, 14. 3, 14.4 an die elektrische Schaltung 12 wird durch jeden Identifikator 14.1, 14.2, 14. 3, 14.4 eine jeweils andere Teilspannung gemessen. Das heißt, dass sich die Teilspannung, die von einem der Identifikatoren 14.1, 14.2, 14. 3, 14.4 gemessen wird, von den Teilspannungen, die durch die jeweils anderen Identifikatoren 14.1, 14.2, 14. 3, 14.4 gemessen werden, unterscheidet.

In dem in Fig. 1 dargestellten Ausführungsbeispiel misst der erste Identifikator 14.1 eine erste Teilspannung von beispielsweise 5V, der zweite Identifikator 14.2 misst eine zweite Teilspannung von beispielsweise 10V, der dritte Identifikator 14.3 misst eine dritte Teilspannung von beispielsweise 15V und der vierte Identifikator 14.4 misst eine vierte Teilspannung von beispielsweise 20V.

Jeder der Identifikatoren 14.1, 14.2, 14. 3, 14.4 weist einen Analog-Digital-Wandler auf (in Fig. 1 nicht explizit eingezeichnet), welcher dazu ausgebildet ist, bei Überschreiten von spezifischen Schwellwertspannungen durch die jeweils gemessene Teilspannung eine entsprechende Kennung auszugeben. Bei dem vorliegenden Ausführungsbeispiel wird die Kennung zu Gunsten eines einfachen Verständnisses als dezimale Kennziffer angegeben. Die Analog-Digital-Wandler der Identifikatoren 14.1, 14.2, 14. 3, 14.4 gemäß dem Ausführungsbeispiel der Fig. 1 sind dazu ausgebildet, bei einer Schwellwertspannung von > 3 V bis ≤ 8 V die Kennung "5" auszugeben. Bei einer Schwellwertspannung von > 8 V bis ≤ 13 V wird die Kennung "10" ausgegeben. Bei einer Schwellwertspannung von > 13 V bis ≤ 18V wird die Kennung "15" ausgegeben und bei einer Schwellwertspannung von > 18 V bis ≤ 23 V wird die Kennung "20" ausgegeben.

Dementsprechend wird durch den ersten Identifikator 14.1, insbesondere dem Analog-Digital-Wandler des ersten Identifikators 14.1, die Kennung "5" ausgegeben, weil der erste Identifikator 14.1, wie oben bereits beschrieben eine erste Teilspannung von 5V misst. Analog dazu wird vom zweiten Identifikator 14.2, insbesondere dem Analog-Digital-Wandler des zweiten Identifikators 14.2, die Kennung "10" ausgegeben. Vom dritten Identifikator 14.3, insbesondere dem Analog-Digital-Wandler des dritten Identifikators 14.3, wird die Kennung "15" ausgegeben. Vom vierten Identifikator 14.4, insbesondere dem Analog-Digital-Wandler des vierten Identifikators 14.4, wird die Kennung "20" ausgegeben.

Wie in Fig. 1 zu erkennen, ist jedem der Identifikatoren 14.1, 14.2, 14. 3, 14.4 ein einziges Endgeräte 4.1, 4.2, 4.3, 4.4 zugeordnet. So ist der erste Identifikator 14.1 dem ersten Endgerät 4.1 zugeordnet. Der zweite Identifikator 14.2 ist dem zweiten Endgerät 4.2 zugeordnet. Der dritte Identifikator 14.3 ist dem dritten Endgerät 4.3 zugeordnet. Der vierte Identifikator 14.4 ist dem vierten Endgerät 4.4 zugeordnet. In dem dargestellten Ausführungsbeispiel sind die jeweiligen Identifikatoren 14.1, 14.2, 14. 3, 14.4 sogar Teil der entsprechenden Endgeräte 4.1, 4.2, 4.3, 4.4. Beispielsweise können die jeweiligen Identifikatoren 14.1, 14.2, 14. 3, 14.4 fester Bestandteil der jeweiligen Micro-Controller der entsprechenden Endgeräte 4.1, 4.2, 4.3, 4.4 sein.

Die Identifikatoren 14.1, 14.2, 14. 3, 14.4 sind zumindest dazu ausgebildet, die jeweiligen Kennungen an das entsprechende Endgerät 4.1, 4.2, 4.3, 4.4 zu übertragen. Das heißt, dass dem ersten Endgerät 4.1 vom ersten Identifikator 14.1 die Kennung "5" zugewiesen wird bzw. die Kennung "5" vom ersten Identifikator 14.1 zum ersten Endgerät 4.1 übertragen wird. Analog dazu wird vom zweiten Identifikator 14.2 die Kennung "10" zum zweiten Endgerät 4.2 übertragen. Vom dritten Identifikator 14.3 wird die Kennung "15" zum dritten Endgerät 4.3 übertragen. Vom vierten Identifikator 14.4 wird die Kennung "20" zum vierten Endgerät 4.4 übertragen.

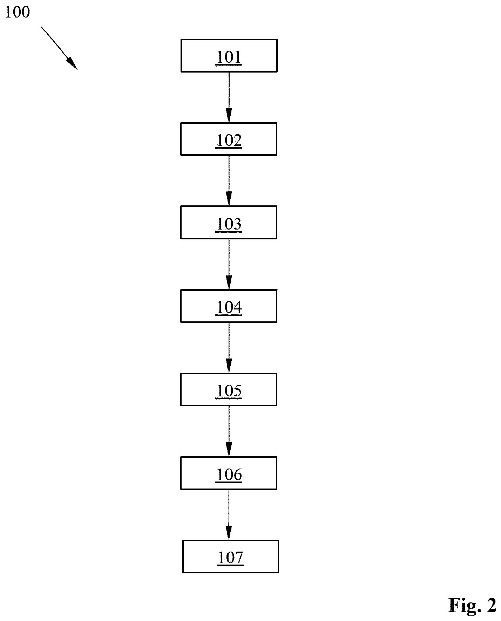

Die Endgeräte 4.1, 4.2, 4.3, 4.4 des Datenübertragungssystems 1 sind dazu ausgebildet, die vom jeweiligen Identifikator 14.1, 14.2, 14. 3, 14.4 erhaltene Kennung innerhalb der Nachrichtenkommunikation über den Datenbus 2 zu verwenden. Diesbezüglich wird auf die nachfolgende Beschreibung zu dem in Fig. 2 gezeigten Verfahrensablauf eines Verfahrens 100 verwiesen.

Fig. 2 zeigt ein Prozessschaubild des Verfahrens 100. Der Verfahrensschritt 101 zeigt ein Anlegen 101 von Spannung. Hierbei handelt es sich insbesondere um das Anlegen 101 von Spannung durch die in Fig. 1 gezeigte Spannungsquelle 11 an die in Fig. 1 ebenfalls gezeigte elektrische Schaltung 12.

In einem weiteren Verfahrensschritt 102 werden durch die Identifikatoren 14.1, 14.2, 14. 3, 14.4, insbesondere durch die jeweiligen Spannungsmesser der Identifikatoren 14.1, 14.2, 14. 3, 14.4, die verschiedenen Teilspannungen gemessen. Dabei wird durch den ersten Identifikator 14.1 eine erste Teilspannung von 5 V, durch den zweiten Identifikator 14.2 eine zweite Teilspannung von 10 V, den dritten Identifikator 14.3 eine dritte Teilspannung von 15 V und durch den vierten Identifikator 14.4 eine vierte Teilspannung von 20 V gemessen.

Bei einem weiteren Verfahrensschritt 103 werden, wie oben bereits beschreiben die verschiedenen Kennungen bereitgestellt. Aufgrund der durch den ersten Identifikator 14.1 gemessenen ersten Teilspannung von 5 V, wird durch den ersten Identifikator 14.1, insbesondere durch den Analog-Digital-Wandler des ersten Identifikators 14.1, die Kennung "5" bereitgestellt. Aufgrund der durch den zweiten Identifikator 14.2 gemessenen zweiten Teilspannung von 10 V, wird durch den zweiten Identifikator 14.2, insbesondere durch den Analog-Digital-Wandler des zweiten Identifikators 14.2, die Kennung "10" bereitgestellt. Aufgrund der durch den dritten Identifikator 14.3 gemessenen dritten Teilspannung von 15 V, wird durch den dritten Identifikator 14.3, insbesondere durch den Analog-Digital-Wandler des dritten Identifikators 14.3, die Kennung "15" bereitgestellt. Aufgrund der durch den vierten Identifikator 14.4 gemessenen vierten Teilspannung von 20 V, wird durch den vierten Identifikator 14.4, insbesondere durch den Analog-Digital-Wandler des vierten Identifikators 14.4, die Kennung "20" bereitgestellt.

In dem darauffolgenden Verfahrensschritt 104 werden die jeweiligen Kennungen, wie bezüglich Fig. 1 bereits beschreiben, von den jeweiligen Identifikatoren 14.1, 14.2, 14. 3, 14.4 an die entsprechenden Endgeräte 4.1, 4.2, 4.3, 4.4 übertragen.

In dem Verfahrensschritt 105 versenden die Endgeräte 4.1, 4.2, 4.3, 4.4 über den Datenbus 2 Nachrichten, wobei die Endgeräte 4.1, 4.2, 4.3, 4.4 innerhalb der Nachrichten die jeweilige Kennung verwenden bzw. mitübertragen. Das heißt, dass das erste Endgerät 4.1 in jeder Nachricht die Kennung "5" mitüberträgt. Analog dazu wird das zweite Endgerät 4.2 in jeder vom zweiten Endgerät 4.2 versendeten Nachricht die Kennung "10" mitübertragen. Das dritte Endgerät 4.3 wird in jeder vom dritten Endgerät 4.3 versendeten Nachricht die Kennung "15" mitübertragen und das vierte Endgerät 4.4 wird in jeder vom vierten Endgerät 4.4 versendeten Nachricht die Kennung "20" mitübertragen.

Hierzu werden beim Versenden 105 der Nachrichten über den Datenbus 2 die Kennungen auf standardisierte und sich grundsätzlich nicht ändernde Teile der Nachrichten aufaddiert. Beispielsweise kann jede Nachricht eine Basiskennung mit dem standardisierten Dezimalwert "100" aufweisen. Auf diese Basiskennung wird nun durch das entsprechende Endgeräte 4.1, 4.2, 4.3, 4.4 die vom jeweiligen Identifikator 14.1, 14.2, 14. 3, 14.4 zugewiesene Kennung aufaddiert. Dementsprechend werden vom ersten Endgerät 4.1 Nachrichten mit einer geänderten Basiskennung, die dem Dezimalwert "105" entspricht, versendet. Analog dazu werden von dem zweiten Endgerät 4.2 Nachrichten mit einer geänderten Basiskennung, die dem Dezimalwert "110" entspricht, versendet. Von dem dritten Endgerät 4.3 werden Nachrichten mit einer geänderten Basiskennung, die dem Dezimalwert "115" entspricht, versendet und von dem vierten Endgerät 4.4 werden Nachrichten mit einer geänderten Basiskennung, die dem Dezimalwert "120" entspricht, versendet.

Es versteht sich von selbst, dass die Kennungen, sowie die geänderten Basiskennungen jeweils in binärer Form, nämlich durch eine Bit-Abfolge bereitgestellt, versendet und/oder empfangen werden. Die Erläuterung anhand von Dezimalwerten dient vorliegend ausschließlich dem besseren Verständnis.

In einem Verfahrensschritt 106 werden die Nachrichten des sendenden Endgeräts 4.1, 4.2, 4.3, 4.4 von den jeweils anderen Endgeräten 4.1, 4.2, 4.3, 4.4 empfangen. Das heißt, dass eine Nachricht, die vom ersten Endgerät 4.1 versendet wurde, vom zweiten Endgerät 4.2, vom dritten Endgerät 4.3 und vom vierten Endgerät 4.4 empfangen wird. Eine Nachricht, die vom zweiten Endgerät 4.2 versendet wurde, wird vom ersten Endgerät 4.1, vom dritten Endgerät 4.3 und vom vierten Endgerät 4.4 empfangen. Eine Nachricht, die vom dritten Endgerät 4.3 versendet wurde, wird vom ersten Endgerät 4.1, vom zweiten Endgerät 4.2 und vom vierten Endgerät 4.4 empfangen. Eine Nachricht, die vom vierten Endgerät 4.4 versendet wurde, wird vom ersten Endgerät 4.1, vom zweiten Endgerät 4.2 und vom dritten Endgerät 4.3 empfangen.

Bei dem in Fig. 2 zuletzt dargestellten Verfahrensschritt 107 wird durch die empfangenden Endgeräte 4.1, 4.2, 4.3, 4.4 anhand der empfangenen Nachricht das versendende Endgerät 4.1, 4.2, 4.3, 4.4 identifiziert. Hierzu wird der standardisierte Wert der Basiskennung der entsprechenden Nachricht vom tatsächlichen Wert der geänderten Basiskennung der empfangenen Nachricht subtrahiert.

Bei einer Nachricht, die vom ersten Endgerät 4.1 versendet wurde und die eine geänderte Basiskennung mit einem Dezimalwert von "105" aufweist, kann durch Subtraktion des standardisierten Dezimalwerts "100" der Basiskennung vom Dezimalwert "105" der geänderten Basiskennung, die Kennung "5", also die Kennung des ersten Endgeräts 4.1, berechnet werden. Dementsprechend kann das erste Endgerät 4.1 als sendendes Endgerät 4.1 identifiziert werden. Analog dazu kann einer Nachricht, die vom zweiten Endgerät 4.2 versendet wurde und die eine geänderte Basiskennung mit einem Dezimalwert von "110" aufweist, durch Subtraktion des standardisierten Dezimalwerts "100" der Basiskennung vom Dezimalwert "110" der geänderten Basiskennung, die Kennung "10", also die Kennung des zweiten Endgeräts 4.2, berechnet werden. Bei einer Nachricht, die vom dritten Endgerät 4.3 versendet wurde und die eine geänderte Basiskennung mit einem Dezimalwert von "115" aufweist, kann durch Subtraktion des standardisierten Dezimalwerts "100" der Basiskennung vom Dezimalwert "115" der geänderten Basiskennung, die Kennung "15", also die Kennung des dritten Endgeräts 4.3, berechnet werden. Bei einer Nachricht, die vom vierten Endgerät 4.4 versendet wurde und die eine geänderte Basiskennung mit einem Dezimalwert von "120" aufweist, kann durch Subtraktion des standardisierten Dezimalwerts "100" der Basiskennung vom Dezimalwert "120" der geänderten Basiskennung, die Kennung "20", also die Kennung des vierten Endgeräts 4.4, berechnet werden.

### BEZUGSZEICHENLISTE

- 1: Datenübertragungssystem
- 2: Datenbus
- 3: Datenbusverbindung
- 4.1: erstes Endgerät
- 4.2: zweites Endgerät
- 4.3: drittes Endgerät
- 4.4: viertes Endgerät

- 10: Vorrichtung
- 11: Spannungsquelle
- 12: elektrische Schaltung
- 13.1: erster ohmscher Widerstand
- 13.2: zweiter ohmscher Widerstand
- 13.3: dritter ohmscher Widerstand
- 13.4: vierter ohmscher Widerstand
- 13.5: fünfter ohmscher Widerstand
- 14.1: erster Identifikator
- 14.2: zweiter Identifikator
- 14.3: dritter Identifikator
- 14.4: vierter Identifikator
- 15: elektrische Verbindung

- 100: Verfahren
- 101: Anlegen einer Spannung
- 102: Messen von Teilspannungen
- 103: Bereitstellen einer Kennung
- 104: Übertragen der Kennung
- 105: Versenden der Kennung über den Datenbus
- 106: Empfangen der Kennung
- 107: Identifizieren des sendenden Endgeräts anhand der empfangenen Kennung

## Patentansprüche

1. Vorrichtung (10) zum Bereitstellen von eindeutigen Kennungen für Endgeräte (4.1, 4.2, 4.3, 4.4), die über einen Datenbus signalkommunizierend miteinander verbunden sind, die Vorrichtung (10) umfassend:
- eine Spannungsquelle (11),
- eine an die Spannungsquelle (11) angeschlossene elektrische Schaltung (12), die dazu ausgebildet ist mehrere verschiedene Teilspannungen bereitzustellen, und
- mehrere Identifikatoren (14.1, 14.2, 14.3, 14.4), die jeweils dazu ausgebildet sind, eine Teilspannung der elektrischen Schaltung (12) zu messen und in Abhängigkeit der gemessenen Teilspannung eine Kennung an ein dem entsprechenden Identifikator (14.1, 14.2, 14.3, 14.4) zugeordnetes Endgerät (4.1, 4.2, 4.3, 4.4) auszugeben.

2. Vorrichtung (10) nach Anspruch 1, **dadurch gekennzeichnet, dass** in jedem Identifikator (14.1, 14.2, 14.3, 14.4) eine Vielzahl von Kennungen hinterlegt sind, wobei jeder Kennung ein vordefinierter Teilspannungsbereich zugeordnet ist, und der Identifikator (14.1, 14.2, 14.3, 14.4) dazu ausgebildet ist, nur die Kennung auszugeben, die dem vordefinierten Teilspannungsbereich entspricht, in dem die gemessene Teilspannung liegt.

3. Vorrichtung (10) nach einem der vorhergehenden Ansprüche, **dadurch gekennzeichnet, dass** jeder Identifikator (14.1, 14.2, 14.3, 14.4) einen Spannungsmesser und einen Analog-Digital-Wandler aufweist, wobei der Analog-Digital-Wandler dazu ausgebildet ist, die durch den Spannungsmesser gemessene Teilspannung in ein digitales Kennungssignal umzuwandeln, und der Analog-Digital-Wandler dazu eingerichtet ist, das Kennungssignal an das Endgerät (4.1, 4.2, 4.3, 4.4) als Kennung auszugeben, das dem entsprechenden Identifikator (14.1, 14.2, 14.3, 14.4) zugeordnet ist.

4. Vorrichtung (10) nach einem der vorhergehenden Ansprüche, **dadurch gekennzeichnet, dass** die elektrische Schaltung (12) ein einfacher Spannungsteiler mit einer Vielzahl von Widerständen (13.1, 13.2, 13.3, 13.4), vorzugsweise ohmschen Widerständen (13.1, 13.2, 13.3, 13.4), ist.

5. Datenübertragungssystem (1) mit:
- einer Vorrichtung (10) gemäß einem der Ansprüche 1-4,
- mehreren Endgeräten (4.1, 4.2, 4.3, 4.4), die über einen Datenbus (2) signalkommunizierend miteinander verbunden sind, wobei
- jedes Endgerät (4.1, 4.2, 4.3, 4.4) signalkommunizierend mit jeweils einem Identifikator (14.1, 14.2, 14.3, 14.4) verbunden ist, und
- jedes Endgerät (4.1, 4.2, 4.3, 4.4) dazu ausgebildet ist, die durch den zugeordneten Identifikator (14.1, 14.2, 14.3, 14.4) ausgegebene Kennung bei der Signalkommunikation über den Datenbus (2) zu verwenden.

6. Datenübertragungssystem (1) nach Anspruch 5, **dadurch gekennzeichnet, dass** das Endgerät (4.1, 4.2, 4.3, 4.4) den Identifikator (14.1, 14.2, 14.3, 14.4) aufweist.

7. Datenübertragungssystem (1) nach einem der Ansprüche 5 oder 6, **dadurch gekennzeichnet, dass** der Datenbus (2) ein CAN-Bus (2) ist.

8. Verfahren (100) zum Bereitstellen von eindeutigen Kennungen für Endgeräte (4.1, 4.2, 4.3, 4.4), die über einen Datenbus (2) signalkommunizierend miteinander verbunden sind, das Verfahren (100) umfassend die folgenden Verfahrensschritte:
- Anlegen (101) einer Spannung an eine elektrische Schaltung (12) mit mehreren in Reihe geschaltenen elektrischen Widerständen (13.1, 13.2, 13.3, 13.4),
- Messen (102) von verschiedenen Teilspannungen der elektrischen Schaltung (12), wobei jede Teilspannung durch jeweils einen Identifikator (14.1, 14.2, 14.3, 14.4) gemessen wird,
- Bereitstellen (103) von jeweils einer Kennung durch jeden der Identifikatoren (14.1, 14.2, 14.3, 14.4), wobei sich die einzelnen Kennungen aufgrund der verschiedenen Teilspannung voneinander unterscheiden,
- Übertragen (104) der jeweiligen Kennung von jedem Identifikator (14.1, 14.2, 14.3, 14.4) an ein dem entsprechenden Identifikator (14.1, 14.2, 14.3, 14.4) zugeordnetes Endgerät (4.1, 4.2, 4.3, 4.4).

9. Verfahren (100) nach Anspruch 8, **dadurch gekennzeichnet, dass** zumindest ein Endgerät (4.1, 4.2, 4.3, 4.4) die durch den entsprechenden Identifikator (14.1, 14.2, 14.3, 14.4) übertragene Kennung über den Datenbus (2) versendet (105).

10. Verfahren (100) nach Anspruch 9, **dadurch gekennzeichnet, dass** die durch das Endgerät (4.1, 4.2, 4.3, 4.4) über den Datenbus (2) versendete Kennung von zumindest einem anderen Endgerät (4.1, 4.2, 4.3, 4.4) am Datenbus (2) empfangen wird (106) und dass das empfangende Endgerät (4.1, 4.2, 4.3, 4.4) aufgrund der Kennung das sendende Endgerät (4.1, 4.2, 4.3, 4.4) eindeutig identifiziert (107).
